# EUROPÄISCHE PATENTSCHRIFT

(11) **EP 1 100 999 B1**
(45) Veröffentlichungstag und Bekanntmachung des Hinweises auf die Patenterteilung: **26.03.2003**
(21) Anmeldenummer: 99930979.2
(22) Anmeldetag: 26.07.1999
(51) Int. Cl.: E03F 3/00, H02G 9/06, G02B 6/44, G02B 6/50, F16L 55/165

(54) **VERFAHREN ZUM VERLEGEN VON DATENKABELN**
METHOD FOR LAYING DATA CABLES
PROCEDE POUR POSER DES CABLES DE DONNEES

(30) Priorität: 30.07.1998 CH 159898; 02.03.1999 CH 37299
(43) Veröffentlichungstag der Anmeldung: 23.05.2001
(73) Patentinhaber: Prusate Foundation, 9494 Schaan (LI)
(72) Erfinder: PRUSAK, Martin, CH-9036 Grub (CH)
(74) Vertreter: Gachnang, Hans Rudolf
(86) Internationale Anmeldenummer: CH9900345
(87) Internationale Veröffentlichungsnummer: WO00006843

(56) Entgegenhaltungen:
- DE-A- 4 203 718
- DE-A- 19 701 787
- DE-A- 19 734 274
- DE-U- 29 816 103
- DE-U- 29 817 126
- PATENT ABSTRACTS OF JAPAN vol. 016, no. 341 (P-1391), 23. Juli 1992 (1992-07-23) & JP 04 102803 A (TOUKIYOUTO GESUIDOU SAABISU KK;OTHERS: 02), 3. April 1992 (1992-04-03)

## Beschreibung

Gegenstand der Erfindung ist ein Verfahren zum Verlegen von Datenkabeln gemäss Oberbegriff des Patentanspruchs 1.

In den meisten Kommunen ist das erdverlegte Kanal- und Rohrleitungsnetz mit Druck- und Freispiegelleitungen überaltert, d.h. die Leitungen sind dreissig, fünfzig und mehr Jahre alt, und es treten immer häufiger undichte Stellen auf und eine vollständige Erneuerung ist notwendig. Die mit der Leitungserneuerung durch Grabarbeiten verbundenen hohen Kosten und die nachfolgenden Kosten für die Reparatur der zerstörten Strassenbeläge fallen meist in eine Zeit knapper finanzieller Mittel.

Seit einigen Jahren werden denn auch grablose Sanierungen von Kanalisationsleitungen angeboten. Viele beruhen auf demselben System: Die undichten Rohre und/oder undichten Muffen einzelner Rohrabschnitte werden mit bekannten Mitteln sehr sauber gereinigt. Anschliessend wird eine Auskleidung des Rohrinnern vorgenommen. Einige bekannte Sanierungsverfahren, sog. Schlauchverfahren, legen einen Schlauch, Liner genannt, durch Einziehen oder Umstülpen ins Rohr. Der Liner, der aus verschiedenen Geweben und/oder Folien besteht und in einem speziellen Harz getränkt ist, wird durch Wasser- oder Luftdruck an die zu sanierende Rohrleitung gedrückt. Nach dem Aushärten des Harzes entsteht ein neues Rohr im alten, welches dicht ist und auch zur Verbesserung der Statik beitragen kann. Abzweigungen in Kanälen, Rohren lassen sich ohne weiteres ebenfalls mit der beschriebenen Technik sanieren, so dass das Rohrleitungssystem mit nur unwesentlich geringerem Rohrquerschnitt wieder über viele Jahre betriebsbereit ist.

Dieses bekannte Sanierungsverfahren eignet sich nicht nur für Rohrabschnitte, sondern es können Rohrleitungssysteme ganzer Quartiere mit beliebiger Länge erneuert werden, ohne dass Strassen, Plätze oder Vorgärten für diese Arbeiten über kürzere oder längere Zeit für Grabungen gesperrt werden müssen.

Der in allen Städten und Kommunen zwingend vorgeschriebene Anschluss aller Häuser an Abwasserkanäle verbindet folglich auch sämtliche Gebäude über ein dicht verzweigtes Netz miteinander. Es wurde daher schon vorgeschlagen, dieses lückenlose Netz für die Übertragung von Daten, d.h. für die Aufnahme von Datenleitungen, wie sie für die Telefonie oder Television notwendig sind, zu nutzen.

Bei einem solchen Verfahren DE-A1-197 01 787 werden durch einen speziell dafür ausgebildeten Roboter in kleinen Abständen Klammern in die lichten Querschnitte der Abwasserleitungen eingesetzt und daran Schutzrohre befestigt, in die Datenleitungen einschiebbar sind. Mit diesem Verfahren lassen sich wohl viele Abwasserleitungen ohne Grabarbeiten für die Führung von Datenleitungen nutzen; die innerhalb des Rohrquerschnitts angeordneten Leitungen können jedoch bei Reinigungsarbeiten, wie sie in periodischen Abständen notwendig sind, beschädigt werden. Die im Rohrinnern aufgehängten Leitungen verhindern allerdings den späteren Einsatz von vielen Sanierungsmethoden, z.B. Reinigungsrobotern, welche mit scharfem Wasserstrahl oder mechanischen Mitteln, wie Fräsen verstopfte Leitungen bearbeiten. Im weiteren können an solchen aufgehängten Datenleitungen Verunreinigungen hängenbleiben und zu Verstopfungen führen.

Aus der im Internationalen Recherchenbericht weiter genannten DE-U-298 17 126 ist eine Auskleideschlauch der genannten Gattung bekannt, in dem ein Kabel oder ein Flachkabelband eingelegt ist. Beim Verlegen des Auskleideschlauchs wird folglich gleichzeitig mindestens ein Kabel mitverlegt. Diese Anordnung hat den Nachteil, dass das eingebettete Kabel beim Transport und/oder beim Einziehen beschädigt werden kann.
Aus der ebenfalls im Internationalen Recherchenbericht genannten DE-Al 197 34 274 ist ein Kommunikationsnetz mit Lichtwellenleitern bekannt, das in fliessende Medien installiert wird. Die Lichtwellenleiter sind mit einer schützenden Beschichtung versehen. Bündel mit mehreren Lichtwellenleitern sind zudem in ein Schutzrohr eingelegt, das beispielsweise in eine Kanalisation eingelegt wird. In Wasserleitungen eingelegte Rohre führen zu Schmutzansammlungen und anschliessender Verstopfung der Leitung.

Es ist auch bekannt, Datenleitungen nach der Reinigung von beschädigten Abwasserrohren in diese einzulegen und danach mit einem Liner, wie er eingangs beschrieben ist, zu überdecken, so dass die Datenleitung zwischen die Aussenseite des Liners und die Wandung des alten Rohres zu liegen kommt (US-A 5,305,798). Auf diese Weise können Beschädigungen der Datenleitungen beim Reinigen der Abwasserleitungen vermieden werden. Allerdings hat diese Verlegungsart den Nachteil, dass die Leitungen im Bereich der Muffen und Abzweigungen sowie bei Rohrversetzungen scharfkantig geknickt werden und entweder das Einführen von Datenleitungen in auf diese Weise verlegte Schutzrohre nicht mehr möglich ist oder bei Verwendung von Glasfaserkabeln diese an diesen Versatz- und Knickstellen brechen.

Die Aufgabe der vorliegenden Erfindung besteht nun darin, ein Verfahren zum Verlegen von Datenleitungen in erdverlegten Rohrleitungen zu schaffen, bei dem die Datenleitungen während des Verlegens und danach stets vor mechanischen und chemischen Beschädigungen geschützt sind. Eine weitere Aufgabe besteht darin, eine Datenübertragungs-Vorrichtung für eine kommunale Abwasseranlage mit mindestens einer Abwasserleitung und einem Wartungsschacht zu schaffen, bei dem die Datenleitungen auf sichere Weise mit den Datenleitungen der Verbraucher verbindbar sind.

Gelöst werden diese Aufgaben durch ein Verfahren gemäss den Merkmalen des Patentanspruches 1.
Vorteilhafte Ausgestaltungen des Verfahrens sind in den abhängigen Ansprüchen definiert.

Es gelingt, mit dem erfindungsgemässen Verfahren die bereits verlegten, zur Infrastruktur einer Kommune gehörenden Rohrleitungen für die Übertragung von Daten und Signalen zu nutzen, ohne dass für diese zusätzliche Nutzung entsprechende Grabarbeiten erfolgen müssen. Es ist möglich, jedes Haus auf diese Weise zu erreichen und an die modernen Kommunikationsanlagen anzuschliessen. Die Verlegung der Rohre kann für sich alleine in einem Schutzstreifen oder anlässlich einer Sanierung alter Leitungen zusammen mit einem Sanierungsliner verlegt werden. Bei Verwendung von Datenleitungen aus Glasfasern bestehen keine Probleme wegen Feuchtigkeit. Die in den Datenkabeln geführten Informationen können in den bereits vorhandenen Wartungsschächten und dort eingesetzten Datenboxen abgezweigt und einzelnen Häusern zugeleitet werden. In einer besonders vorteilhaften Ausgestaltung lässt sich die Datenbox für Überwachungs-, Verbindungs- und Servicearbeiten aus dem Schacht herausheben. Auch die in Schacht entlang dessen Wand geführte Reserveschlaufe ermöglicht es, die Datenbox zu einem entsprechend ausgerüsteten Mess- und Servicewagen zu transportieren, ohne dass dadurch die Datenübertragung unterbrochen oder gestört wird.

Anhand illustrierter Ausführungsbeispiele wird die Erfindung näher erläutert. Es zeigen
- Figur 1: einen Querschnitt durch eine Abwasserrohrleitung mit eingelegtem Liner und darin eingebetteten, als Flachbänder ausgebildeten Datenleitungen,
- Figur 2: einen Querschnitt durch eine sanierte Abwasserrohrleitung mit einem im Liner eingebetteten Schutzrohr,
- Figur 3: einen Querschnitt durch eine sanierte Abwasserrohrleitung mit drei Datenleitungsbündeln,
- Figur 4: einen vergrösserten Ausschnitt eines Rohrquerschnittes gemäss Figur 1, Ausschnitt A,
- Figur 5: einen Querschnitt durch eine Abwasserrohrleitung mit Datenleitungsbündeln im Scheitel des Rohres,
- Figur 6: eine schematische Darstellung eines kommunalen Kanalnetzes von den Gebäuden zu den Zugangsschächten in den Strassen,
- Figur 7: einen Querschnitt durch einen Zugangsschacht mit zwei sichtbaren Leitungsabgängen mit Datenleitungen und einer Datenbox,
- Figur 8: eine schematisch Darstellung einer geöffneten Datenbox,
- Figur 9: einen Teilquerschnitt durch den Zugangsschacht mit einer Datenbox und einem umlaufenden Kabelspeicher.

Ein Rohr, wie es in Kanalisationen für Regen- und Schmutzabwässer eingesetzt ist, weist üblicherweise einen runden, ovalen oder rechteckigen Querschnitt auf und umfasst einen Rohrkörper 1 aus Beton, Steingut, Stahl oder Kunststoff. Die Innenfläche 3 solcher Rohre ist anfänglich glatt. Durch Abrieb, Korrosion, Erschütterungen oder Senkungen können Schäden, wie Risse, fehlende Rohrstücke oder Brüche entstehen, ohne den Rohrleitungsquerschnitt Q wesentlich zu verändern. An Muffen-Verbindungsstellen einzelner Rohrabschnitte können ebenfalls undichte Stellen, Versetzungen oder Verschiebungen auftreten.

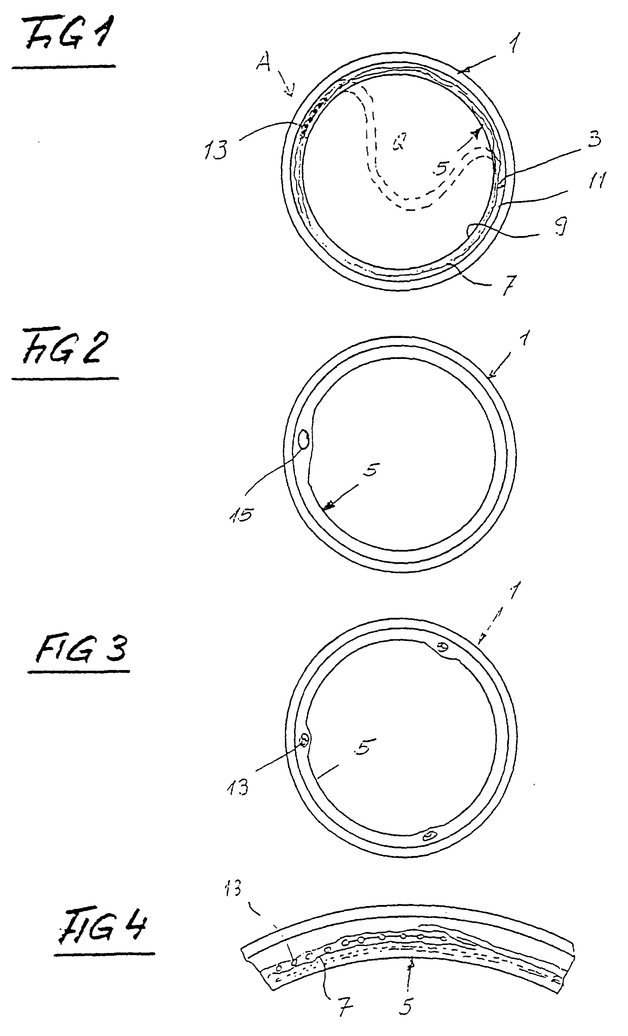

Zur Überbrückung bzw. Abdeckung und Abdichtung solcher Schäden ist es bekannt, nach einer gründlichen Reinigung der Rohrleitung 1 einen schlauchförmigen Liner 5 einzuziehen. Um das Einziehen zu erleichtern, weist der Liner 5 entweder eine Faltung (gebrochene Linien in Figur 1) auf, oder dessen Aussendurchmesser ist kleiner als der Innendurchmesser der Rohrleitung 1. Der Einzug des Liners 5 kann auch durch Umstülpen erfolgen. Durch Einführen von Wasser oder Druckluft kann der in sich instabile Liner 5 in eine zylindrische Form gebracht und durch Dehnung satt an die Innenwand 3 der Rohrleitung 1 angepresst werden. Der Liner 5 kann eine Armierung aus Glasfasern, Filz oder aus Natur- oder Kunstfasern 7 und innen eine schlauchförmige Hülle 11 aus Filz und/oder eine Schutzfolie 9 aufweisen. Die Glasfasermatte 7 und die schlauchförmige Hülle 11 sind mit einem aushärtbaren Kunststoffmaterial, z.B. Polyester-, Vinylester-, Epoxi - oder 3P-Harz, getränkt.

Zwischen dem aussenliegenden Vlies- oder Filzkörper 11 und der Glasfasermatte 7 sind im ersten Ausführungsbeispiel mit einem runden Rohrkörper 1 Glaserfaserkabel 13 eingebettet, welche parallel nebeneinander liegen und als Flachbänder bezeichnet werden. Durch die sehr dünnen, in eine Ummantelung eingebetteten oder mantellosen Glasfasern erfährt der Liner 5 nur eine unwesentliche Verdickung, die zudem parallel zur Achse der Rohrleitung 1 verläuft. Nach der Aushärtung des Liners 5 sind die Kabel 13 unverrückbar und allseitig geschützt in der Kunststoffmasse eingebettet. Sie können weder durch Reinigungsvorrichtungen, welche Wasser verwenden, noch durch solche, welche mechanische Mittel einsetzen, beschädigt werden. Selbstverständlich könnten anstelle von Glasfaserkabel auch solche aus Kupfer treten.

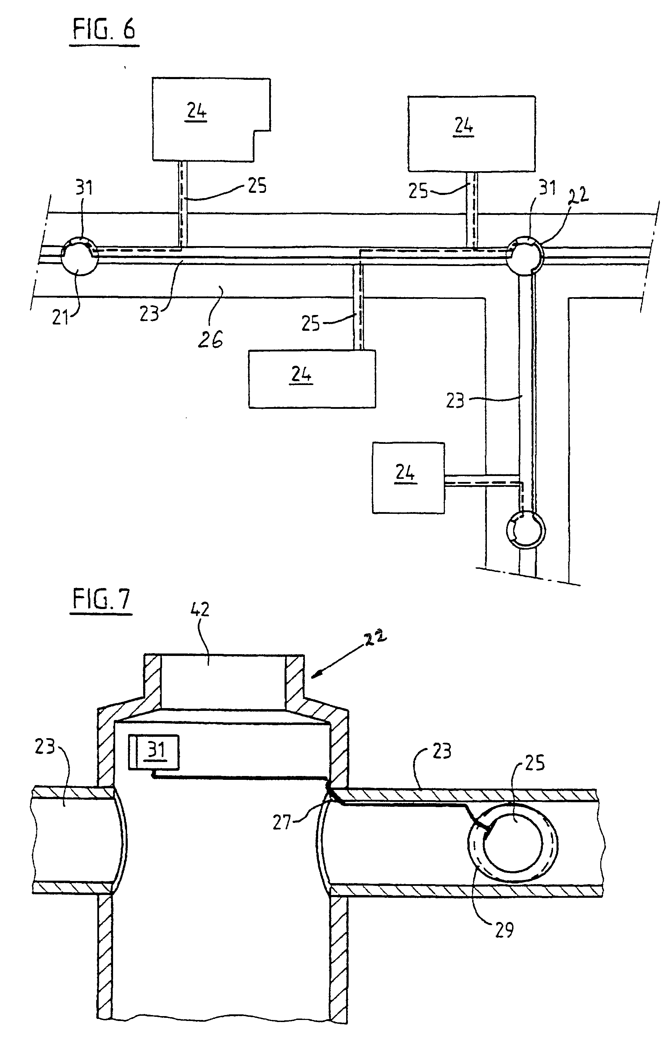

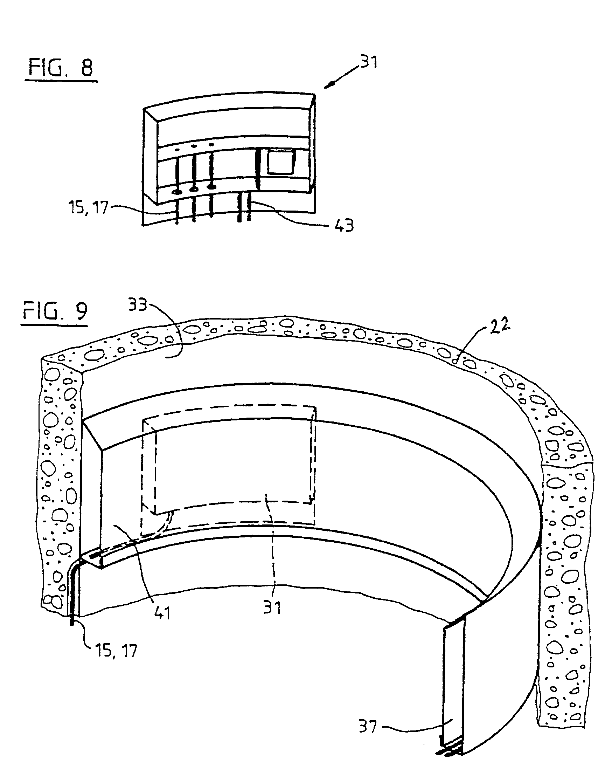

Die Datenkabel 13 werden bei der Konfektion des Liners 5 temporär mit der armierenden Glasfasermatte 7 verbunden und mit dieser entsprechend dem Durchmesser der zu sanierenden Rohrleitung 1 verarbeitet. An den Enden überragen die Datenkabel den Liner 5 in der benötigten Anschlusslänge, z.B. einer Länge, die ausreicht, um die Datenkabel in einer Verbindungs-, Daten- oder Schaltbox 31 zu spleissen oder auf andere Art miteinander zu verbinden (vgl. Figuren 7 bis 9).

In der Ausgestaltung der Erfindung gemäss Figur 2 tritt an die Stelle der zu Flachbändern ausgebildeten Datenkabel 13 ein Schutzrohr 15, welches in den Liner 5 eingebettet ist, wie dies im Beispiel gemäss Figur 1 für die Flachbänder dargestellt ist. Durch das Einlegen des Schutzrohres 15 ergibt sich ebenfalls nur eine minimale Verdickung des Liners 5. Diese hat allerdings keine Auswirkungen auf eine optimale Strömung innerhalb der Rohrleitung 1, denn an der Innenseite bleibt der Liner 5 glatt und es können keine Verunreinigungen hängenbleiben. Die Datenleitungen 13 können jederzeit in die das Schutzrohr 15 eingezogen bzw. eingeblasen werden, und es können bei Schäden die Datenleitungen 13 ausgetauscht werden, ohne dass Grabungen vorgenommen werden müssen.

Figur 3 zeigt eine Ausgestaltung der Erfindung mit beispielsweise drei Datenleitungen 13, eingesetzt an unterschiedlichen Stellen des Liners 5. Auf diese Weise lassen sich in einer Rohrleitung 1 völlig getrennte Datenleitungen für verschiedene Nutzer unterbringen.

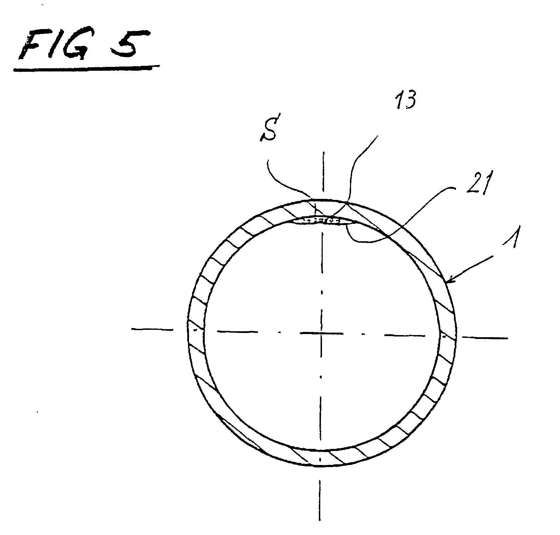

In der Ausgestaltung der Erfindung gemäss Figur 4 sind die Datenleitungen 13, im vorliegenden Fall Glasfaserkabel, selbst Teil der armierenden Glasfasermatte. Mit anderen Worten, die als Datenkabel vorgesehenen Glasfasern sind bereits in die Armierung, hier in die Glasfasermatte 7, die zur Herstellung des Liners 5 verwendet wird, eingearbeitet.

In der Ausgestaltung der Erfindung nach Figur 5 sind die Datenleitungen 13 beispielsweise im Scheitelbereich S des Rohrkörpers 3 in einem bandförmigen Schutzstreifen 21 eingebettet. Der die Datenkabel 13 vor mechanischer und chemischer Beschädigung schützende Streifen 21 kann direkt auf der Wandung eines neuen oder eines alten Rohres 1 oder auf einer in diesem nachträglich aufgebrachten Beschichtung, z.B. einem harzgetränkten Liner, befestigt sein.

Das Einlegen des die Datenkabel 13 oder Datenkabel aufnehmende Rohre 15 enthaltenden Schutzstreifens 21 kann wie folgt geschehen: Der Schutzsteifen 21 aus einem Vlies- oder Gewebematerial wird mit den darin eingelegten Datenkabeln 13 mit Harz getränkt. Mit einem Rohrroboter oder einem anderen geeigneten Einführmittel wird der Schutzstreifen 21 zwischen einem aufblasbaren Schlauch, wie er auch zur Rohrsanierung Verwendung findet, in den Rohrkörper 1 eingeführt und durch Aufdehnen des vorzugsweise aus Gummi bestehenden Schlauchs an die Rohrwand, vorzugsweise im Bereich des Scheitels S des Rohrkörpers 1 angepresst werden. Beim Aushärten des Harzes im Schutzstreifen 21 verbindet sich letzterer unlösbar mit der Wandung des Rohrkörpers 1. Anschliessend kann der dehnbare Schlauch nach dem Ablassen des Druckmediums (Wasser oder Luft) aus der Rohrleitung 1 entfernt werden. Die seitlichen Ränder des Schutzstreifens 21 gehen im wesentlichen stufenlos in die Wandung des Rohrkörpers 1 über und verhindern das Anhaften von Schwemmstoffen. Selbstverständlich könnte der für das Einbringen benutzte Schlauch auch aus einem mit Harz getränkten Material bestehen und im Rohrkörper 1 verbleiben und eine neue glatte Rohroberfläche bilden.

In den Figuren 6 bis 9 ist ein Beispiel für die Verlegung der erfindungsgemäss in den Abwasserrohren verlegten Datenkabel 13 und deren Herausführung dargestellt und erläutert.
Kommunale Rohrleitungssysteme müssen für die Wartung in grösseren oder kleineren Abständen durch Schächte 21 zugänglich sein. In den Rohrleitungsabschnitten 23 (Hauptleitungen meist unter Strasse 26 verlegt) zwischen den Schächten 22 können die kleineren Leitungen 25, z.B. Anschlussleitungen zu Häusern 24, direkt einmünden. Diese Mündungsbereiche sind nur mit ferngesteuerten Robotern erreichbar. Dennoch können auch an diesen Mündungs- und Abzweigstellen die Datenleitungen 13,15 einwandfrei verlegt werden, um einerseits den Widerstand für das fliessende Abwasser gering zu halten und anderseits ein Knicken der Glasfasern bei der Abzweigung zu verhindern. Zu diesem Zweck werden die kantigen, meist rechtwinkligen Übergänge, wie sie bei Rohrabzweigungen und auch beim Eintritt der Rohrleitungen 23 in die Schächte 22 vorhanden sind, mit einem die Kante durchdringenden Schlitz 27 versehen. In diesem können die Datenleitungen 13 oder Rohre 15 mit für sie geeignetem Radius umgelenkt eingelegt werden (die Datenleitungen von den Häusern zu den Schächten 22 sind in Fig. 6 in gebrochen dicken Linien dargestellt). Zum Schutz der Datenleitungen 13, 15 kann ein Kragen 29 aus mit Harz getränkten Faservlies in den Rohreingang eingelegt werden. Der Kragen 29 überdeckt dabei den zylindrischen Abschnitt der einmündenden Rohrleitung 23 und einen kreisringförmigen Bereich um die Mündung in den Schacht 22 bzw. in die Hauptleitung 23, wenn in diese eine kleinere Leitung 25 einmündet. Der Schlitz 27 wird vorzugsweise nicht wie dargestellt (Figur 7) in Scheitel der Rohrleitung 27 eingelassen, sondern versetzt dazu, denn die heute gebräuchlichen Reinigungsvorrichtungen gleiten über den oberen Scheitel aus dem Schacht in die abzweigenden Leitungen 23. Das Abdecken der Datenleitungen 13,15 bei den Abzweigungen von einer Rohrleitung zur andern oder bei der Mündung in einen Schacht kann auch durch Verspachteln oder Injizieren mit einer Füllmasse des zuvor für die Aufnahme der Datenleitungen erstellten Schlitzes erfolgen. Die von Schacht zu Schacht führenden Datenleitungen sind in Figur 6 in dicken Linien dargestellt).

In einer weiteren Ausgestaltung der Erfindung ist in den Figuren 7 bis 9 die Anordnung einer Datenbox 31 dargestellt, in welcher die Datenleitungen 13,15 aus den Rohrleitungen 23 enden. An den Datenboxen 31 können die übertragenen Signale und/oder Ströme, wenn Kupferleitungen zum Einsatz kommen, abgenommen und individuell weitergeleitet, verstärkt oder verzweigt werden. Die Datenbox 31 ist mit der Wand 33 des Schachtes 22 vorzugsweise lösbar verbunden und die Datenkabel 13,15 werden entweder an der Rückseite oder an einer Seitenkante in die wasserdichte Datenbox 31 eingeführt. Im Innern der Datenbox 31 ist Raum für die Unterbringung von Spleiss- oder anderen Kupplungen und, falls notwendig, für einen Signalverstärker oder andere, auch stromführende Apparate vorhanden. Die Datenbox 31 weist vorzugsweise ein explosionsgeschütztes Gehäuse aus säurebeständigem Kunststoff und einen vandalensicheren Verschlussdeckel 41 auf. Die Datenbox 31 kann in einer besonders vorteilhaften Ausgestaltung der Erfindung auf einem im Schacht 22 ganz oder teilweise umlaufenden profilierten Kabelkanal 37 befestigt sein. Der Kabelkanal 37 dient zur Aufnahme der in den Schacht 22 einmündenden Datenleitungen 13, bevor diese in die Datenbox 31 eingeführt werden. Als Kabelkanal 37 kann ein extrudiertes Kunststoff- oder Metallprofil verwendet werden, das rückseitig mit der Schachtwand 33 fest verbunden ist und schachtseitig offen ist oder mit dem Deckel 41 verschlossen werden kann. Erstreckt sich der Kabelkanal 37 über den gesamten Umfang des Schachts 22, so kann bereits mit einem einzigen Umgang eine Längenreserve an Datenkabeln im Betrag des dreifachen Schachtdurchmessers gespeichert werden. Dies erlaubt es, zum Anschlisssen neuer Anschlüsse an die Datenleitungen, die Datenbox 31 temporär aus dem Schacht 22 herauszunehmen und das Verbinden an geschützter Stelle, z.B. innerhalb eines Wartungsfahrzeugs, das über oder neben der Schachtöffnung 42 steht, vorzunehmen. Es können auch Signalmessungen auf diese Weise bequem und mit den notwendigen Instrumenten leicht durchführt werden, ohne dass dabei die Signalübertragung unterbrochen werden muss.

Wenn im Schacht keine Abzweigungen oder Zusammenführungen von Datenleitungen erfolgen müssen, können die Datenleitungen selbstverständlich ununterbrochen der Schachtwand entlang von der Zufluss- zur Abflussleitung geführt werden.

Die Erfindung ist vorstehend anhand einer Verlegung der Datenkabel 13 in Abwasserleitungen beschrieben worden. Mit entsprechenden Anpassungen lassen sich die Datenkabel 13 selbstverständlich auch in Druckwasser- und in Gasleitungen verlegen. Die Datenbox 31 ist dann natürlich ausserhalb des Druckbereichs anzuordnen.

## Patentansprüche

1. Verfahren zum Verlegen von Datenkabeln (13) in erdverlegte Druck- und Freispiegel-Rohrleitungen (1), **gekennzeichnet durch** die Verfahrensschritte:
a) Einlegen von einem oder mehreren Datenkabel (13) aufnehmenden Schutzrohren (15) in einen Schutzstreifen (21),
b) Tränken des Schutzstreifens (21) mit einem Harz,
c) Einführen des Schutzstreifens (21) in die Rohrleitung (1),
d) Einlegen und Dehnen eines Dehnschlauches bis zur satten Anlage des Schutzstreifens (21) an der Rohrleitung (1) und
e) Aushärten des Harzes und Erzeugen einer unlösbaren Verbindung des Schutzstreifens (21) mit der Rohrleitung (1).

2. Verfahren nach Anspruch 1, **dadurch gekennzeichnet, dass** das mindestens eine Datenkabel (13) aufnehmende Rohr (15) vom Harz und/oder im Harz eingelegter Armierungen (7) und/oder einer Folie (9,11) umschlossen ist.

3. Verfahren nach einem der Ansprüche 1 oder 2, **dadurch gekennzeichnet, dass** dis Datenkabel (13) aufnehmenden Rohre (15) an den Enden der Rohrleitungen (1) in einen Schacht (22) eingeleitet und entlang der Wand zu einer weiterführenden Rohrleitung (1) oder in eine Datenbox (31) geführt werden.

4. Verfahren nach Anspruch 3, **dadurch gekennzeichnet, dass** die Datenkabel (13) aufnehmenden Rohre (15) in einem Schlitz in der Schachtwand oder in einem Kabelkanal (37) entlang der Schachtwand geführt werden.

5. Verfahren nach einem der Ansprüche 3 oder 4, **dadurch gekennzeichnet, dass** das eine Ende des mindestens ein Datenkabel (13) aufnehmenden Schutzrohres (15) in einen Schacht (22) eingeführt und dort mit der Datenbox (31) verbunden wird, von welcher Datenbox (31) weitere Datenleitungen (43) wegführen.

6. Verfahren nach Anspruch 4, **dadurch gekennzeichnet, dass** das mindestens eine Datenkabel (13) aufnehmende Schutzrohr (15) im Schacht (22) in einem Kabelkanal (37) geführt wird, welcher sich ganz oder teilweise über den Umfang des Schachtes (22) erstreckt und zur Aufnahme einer Datenkabel-Reserve zwischen dem Ende der in den Schacht (22) mündenden, den Schutzstreifen (21) mit dem Schutzrohr (15) tragenden Abwasserleitung (23,25) und der Datenbox (31) dient.

7. Verfahren nach einem der Ansprüche 4 oder 6, **dadurch gekennzeichnet, dass** die Datenkabel (13) aufnehmenden Schutzrohre (15) im Übergang von einer Anschlussleitung (25) in eine Hauptleitung (23) oder von einer Hauptleitung (23) in den Schacht (22) im Schlitz (27) geführt werden und dass der Schlitz (27) von einem mit der Leitungswand und/oder der Schachtwand unlösbar verbundenen Kragen (29) bedeckt wird.

8. Verfahren nach einem der Ansprüche 6 oder 7, **dadurch gekennzeichnet, dass** der Kabelkanal (37) mit einem Deckel (41) verschliessbar ist.

## Claims

1. Method of laying data cables (13) in pressurised and non-pressurised pipelines (1) which have been laid in the ground, **characterised by** the following method steps:
a) inserting one or more protective tubes (15), which accommodate data cables (13), into a protective strip (21);
b) saturating the protective strip (21) with a resin;
c) introducing the protective strip (21) into the pipeline (1);
d) inserting and expanding an expansion hose until the protective strip (21) abuts fully against the pipeline (1); and
e) hardening the resin and producing a non-detachable connection between the protective strip (21) and the pipeline (1).

2. Method according to claim 1, **characterised in that** the tube (15), which accommodates at least one data cable (13), is surrounded by the resin and/or by reinforcements (7) inserted in the resin and/or by a film (9, 11).

3. Method according to one of claims 1 or 2, **characterised in that** the tubes (15), which accommodate data cables (13), are introduced into a shaft (22) at the ends of the pipelines (1) and are located to extend along the wall to a continuing pipeline (1) or into a data box (31).

4. Method according to claim 3, **characterised in that** the tubes (15), which accommodate data cables (13), are located to extend in a slot in the shaft wall or in a cable duct (37) along the shaft wall.

5. Method according to one of claims 3 or 4, **characterised in that** the one end of the protective tube (15), which accommodates at least one data cable (13), is introduced into a shaft (22) and connected there to the data box (31), additional data lines (43) leading away from said data box (31).

6. Method according to claim 4, **characterised in that** the protective tube (15), which accommodates at least one data cable (13), is located to extend in the shaft (22) in a cable duct (37), which extends wholly or partially over the circumference of the shaft (22) and serves to accommodate a spare data cable between the end of the drainage pipe (23, 25), which terminates in the shaft (22) and carries the protective strip (21) with the protective tube (15), and the data box (31).

7. Method according to one of claims 4 or 6, **characterised in that** the protective pipes (15), which accommodate data cables (13), are located to extend in the slot (27) in the transition from a connection pipe (25) to a main pipe (23) or from a main pipe (23) to the shaft 22), and **in that** the slot (27) is covered by a collar (29), which is non-detachably connected to the pipe wall and/or the shaft wall.

8. Method according to one of claims 6 or 7, **characterised in that** the cable duct (37) is closable with a cover (41).

## Revendications

1. Procédé pour poser des câbles de données (13) dans des canalisations sous pression et à écoulement libre (1) noyées dans le sol, **caractérisé par** les étapes de procédé suivantes :
a) insertion de tubes de protection (15) recevant un ou plusieurs câbles de données (13) dans une bande de protection (21),
b) imprégnation de la bande protection (21) avec une résine,
c) introduction de la bande de protection (21) dans la canalisation (1),
d)insertion et expansion d'un tuyau souple d'expansion jusqu'au joint à point plat de la bande de protection (21) à la canalisation (1) et
e) durcissement de la résine et production d'une liaison indétachable entre la bande de protection (21) et la canalisation (1).

2. Procédé selon la revendication 1, **caractérisé en ce que** le tube (15) recevant au moins un câble de données (13) est entouré par la résine et/ou par une armature (7) insérée dans la résine et/ou par une feuille (9, 11).

3. Procédé selon l'une des revendications 1 ou 2, **caractérisé en ce que** les tubes (15) recevant les câbles de données (13) sont introduits dans un puits (22) aux extrémités des canalisations (1) et sont guidés le long de la paroi jusqu'à une canalisation (1) se prolongeant ou dans un coffret de données (31).

4. Procédé selon la revendication 3, **caractérisé en ce que** les tubes (15) recevant les câbles de données (13) sont guidés dans une fente dans la paroi du coffret ou dans un caniveau à câbles (37) le long de la paroi du coffret.

5. Procédé selon l'une des revendications 3 ou 4, **caractérisé en ce que** l'une des extrémités du tube de protection (15) recevant au moins un câble de données (13) est introduite dans un puits (22) où elle est reliée au coffret de données (31), à partir duquel coffret de données (31) partent d'autres lignes de données (43).

6. Procédé selon la revendication 4, **caractérisé en ce que** le tube de protection (15) recevant au moins un câble de données (13) est amené dans le puits (22) dans un caniveau à câbles (37) qui s'étend entièrement ou partiellement sur le pourtour du puits (22) et qui sert à recevoir une réserve de câbles de données entre l'extrémité de la canalisation d'eaux usées (23, 25) débouchant dans le puits (22) et portant la bande de protection (21) avec le tube de protection (15) et le coffret de données (31).

7. Procédé selon l'une des revendications 4 ou 5, **caractérisé en ce que** les tubes de protection (15) recevant les câbles de données (13) sont guidés, dans le passage d'une canalisation de raccordement (25) à une canalisation principale (23) ou d'une canalisation principale (23) au puits (22), dans la fente (27) et **en ce que** la fente (27) est recouverte par une collerette (29) raccordée de manière indétachable à la paroi de la canalisation et/ou à la paroi du puits.

8. Procédé selon l'une des revendications 6 ou 7, **caractérisé en ce que** le caniveau à câbles (37) peut être obturé à l'aide d'un couvercle (41).
